(19) Europäisches Patentamt
European Patent Office
Office européen des brevets

(11) Veröffentlichungsnummer: **0 061 659**
**B1**

(12) # EUROPÄISCHE PATENTSCHRIFT

(45) Veröffentlichungstag der Patentschrift: **22.04.87**

(51) Int. Cl.⁴: **C 07 D 401/14,** C 08 K 5/34, C 08 L 23/12 // (C07D401/14, 251:04, 211:58)

(21) Anmeldenummer: **82102193.8**

(22) Anmeldetag: **18.03.82**

(54) **Piperidingruppenhaltige Ester, Verfahren zu ihrer Herstellung, ihre Verwendung als Stabilisatoren für Polymere sowie diese Verbindungen enthaltende Polymere.**

(30) Priorität: **21.03.81 DE 3111209**

(43) Veröffentlichungstag der Anmeldung: **06.10.82 Patentblatt 82/40**

(45) Bekanntmachung des Hinweises auf die Patenterteilung: **22.04.87 Patentblatt 87/17**

(84) Benannte Vertragsstaaten: **AT BE CH DE FR GB IT LI NL SE**

(56) Entgegenhaltungen:
**EP - A - 0 003 542**
**AT - B - 351 269**
**DE - A - 2 319 816**
**DE - A - 2 422 335**
**DE - A - 2 621 870**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Wiezer, Hartmut, Dr., Am Stocket 18, D-8901 Lützelburg (DE)**
Erfinder: **Pfahler, Gerhard, Dr., Karlsbader Strasse 27, D-8900 Augsburg (DE)**

**EP 0 061 659 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung sind Polyalkylpiperidinverbindungen der allgemeinen Formel (I),

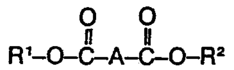
I

in welcher –A–

a) für $C_1$–$C_{18}$-, vorzugsweise $C_1$–$C_{12}$-Alkylen oder $C_2$–$C_{18}$-Alkenylen steht, welches jeweils durch 1 oder 2 OH-Gruppen substituiert sein kann, oder

b) für Phenylen, Naphthylen oder einen $C_3$–$C_{12}$-, vorzugsweise $C_4$–$C_6$-, insbesondere $C_6$-cycloaliphatischen Rest steht, welche jeweils noch $C_1$–$C_4$-Alkylreste oder 1 bis 2 OH-Gruppen tragen können, oder

c) für ein $C_7$–$C_{14}$-Phenylalkylen stehen kann, wobei die vorstehenden Bedeutungen a) und b) jeweils noch durch 1 oder 2

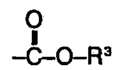

-Reste substituiert sein können, oder

d) für den Rest

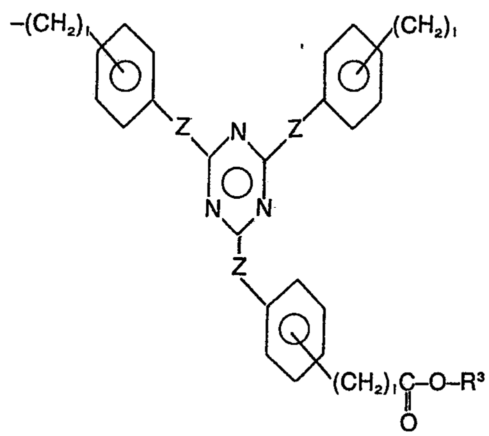

oder

e) für einen Rest

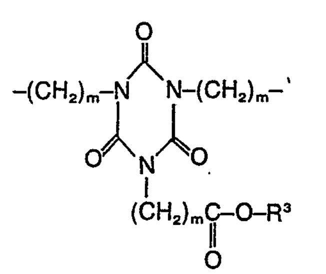

steht, wobei in diesen Resten

l eine ganze Zahl von 0 bis 2, vorzugsweise 0,

m eine ganze Zahl von 1 bis 5, vorzugsweise 1 oder 2, insbesondere jedoch 1 ist,

Z –O–, oder –NH– ist,

$R^1$, $R^2$ und $R^3$ für eine Gruppe der Formel (II),

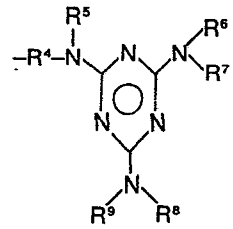
II

stehen, wobei in der Formel (II)

$R^4$ eine $C_2$- bis $C_6$-Alkylengruppe ist,

$R^5$ insbesondere Wasserstoff, $C_1$- bis $C_{12}$-Alkyl, $C_5$- bis $C_{12}$-Cycloalkyl oder bevorzugt eine Gruppe der Formel (III),

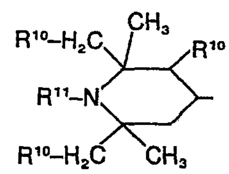
III

ist mit

$R^{10}$ = Wasserstoff oder Methyl,

$R^{11}$ = Wasserstoff, oder $C_1$- bis $C_{12}$-Alkyl, vorzugsweise jedoch Wasserstoff.

Die Reste $R^6$, $R^7$, $R^8$ und $R^9$ sind gleich oder verschieden und bedeuten Wasserstoff, $C_1$- bis $C_{18}$-, vorzugsweise $C_1$- bis $C_8$-Alkylreste, $C_5$- bis $C_{12}$-Cycloalkyl, Allyl, Phenyl, das durch 1 oder 2 $C_1$- bis $C_8$-Alkylgruppen und/oder durch OH substituiert sein kann, $C_7$- bis $C_{14}$-Aralkyl, vorzugsweise $C_7$- bis $C_{14}$-Phenylalkyl, insbesondere $C_7$- bis $C_9$-Phenylalkyl, eine Gruppe der Formel (III) oder eine Gruppe der Formel (IV).

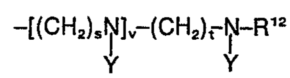
IV

In der Formel (IV) bedeuten:

s und t gleiche oder unterschiedliche Zahlen von 2 bis 6, vorzugsweise 2 oder 3, und

v eine Zahl von 0 bis 3, vorzugsweise 0 oder 1 und insbesondere 0,

$R^{12}$ steht für Wasserstoff, für $C_1$- bis $C_{18}$, vorzugsweise $C_1$- bis $C_{12}$- und insbesondere $C_1$- bis $C_8$-Alkyl, für $C_5$- bis $C_{12}$-Cycloalkyl, für $C_7$- bis $C_{14}$-Aralkyl, insbesondere $C_7$- bis $C_9$-Phenylalkyl oder für eine Gruppe der Formel (III), und Y hat die Bedeutung eines Restes der Formel (V),

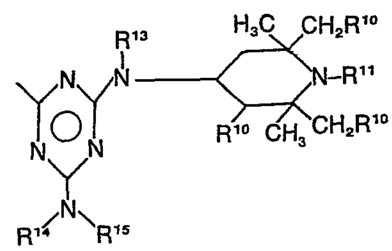
V

in der

$R^{10}$ und $R^{11}$ die vorstehend angegebenen, und

$R^{13}$ und $R^{14}$ die für $R^6$, $R^7$, $R^8$ und $R^9$ genannten Bedeutungen, ausgenommen die der Formel (IV) haben, und

$R^{15}$ Wasserstoff, $C_1$- bis $C_{18}$-Alkyl, vorzugsweise $C_1$- bis $C_{12}$-Alkyl, insbesondere $C_1$- bis $C_8$-Alkyl, $C_5$- bis $C_{12}$-Cycloalkyl, $C_7$- bis $C_{14}$-Aralkyl, vorzugsweise $C_7$- bis $C_{14}$-Phenylalkyl und insbesondere $C_7$- bis $C_9$-Phenylalkyl oder bevorzugt eine Gruppe der Formel (III) ist.

In der Formel (I) muss mindestens ein Rest für eine Gruppe der Formel (III) stehen oder diese enthalten.

Hochmolekulare Polyalkylpiperidinverbindungen der allgemeinen Formeln

$$R^1[-O-\overset{O}{\overset{\|}{C}}-A-\overset{O}{\overset{\|}{C}}-OB]_nOH \text{ und } R^1[-O\overset{O}{\overset{\|}{C}}-\overset{H}{N}-A-\overset{H}{N}-\overset{O}{\overset{\|}{C}}OB]_nOH$$

sind Gegenstand der Teilanmeldung Nr. 84 105 907.4 (= EP-A-176 604).

Die neuen Verbindungen werden durch Umsetzen von Estern der Formel (VI)

$$RO\overset{O}{\overset{\|}{C}}-A-\overset{O}{\overset{\|}{C}}OR \qquad VI$$

in welcher A die vorstehend angegebene Bedeutung und R die von Methyl oder Ethyl hat, mit einer Verbindung der allgemeinen Formel (VII)

$$HOR^2 \qquad VII,$$

hergestellt, wobei in dieser Formel $R^2$ die vorstehend angegebene Bedeutung hat. Es wird die, bezogen auf in (VI) vorhandene funktionelle Reaktionsgruppen, äquivalente Menge an (VII) eingesetzt.

Die Reaktion wird in inerten organischen Lösungsmitteln bei Temperaturen von 70 bis 200, vorzugsweise 110 bis 200 und insbesondere 130 bis 180 °C, gegebenenfalls in Gegenwart von Katalysatoren durchgeführt. Geeignete Lösungsmittel sind z.B. Toluol, Xylol, Mesitylen und Dioxan.

Als Katalysatoren können für die Umesterungen NaH, $LiNH_2$, Alkalimetallalkoholate oder Titantetraalkylate jeweils in Mengen von 0,05 bis 1,0 Gew.-%, bezogen auf Verbindung (VII) verwendet werden.

Beispiele für Ausgangsmaterialien der Formel (VI) sind:

1. Malonsäurediethylester
2. Bernsteinsäuredimethylester
3. Adipinsäuredimethylester
4. Korksäuredimethylester
5. Sebazinsäuredimethylester
6. Dodecandisäuredimethylester
7. Terephthalsäuredimethylester
8. Maleinsäuredimethylester
9. Fumarsäuredimethylester
10. Itaconsäuredimethylester
11. Äpfelsäuredimethylester
14. Tetrahydrophthalsäuredimethylester
15. Bis-carbethoximethylenmalonsäuredimethylester
16. 1,3,5-Tris-(carbethoximethylen)-isocyanurat
17. 1,3,5-Tris-(carbmethoximethylen)-isocyanurat
18. 1,3,5-Tris-(carbmethoxiethylen)-isocyanurat
19. Tris-2,4-[4-(carbethoxi)-phenylenoxi]-1,3,5-triazin

Beispiele für Ausgangsmaterialien der Formel (VII), welche zur Herstellung solcher Verbindungen der Formel (I) dienen, in denen $R^1$, $R^2$ und $R^3$ Reste der Formel (II) bedeuten, sind,

20. 2-(3-Hydroxipropylamino)-4,6-bis-[N-(2,2,6,6-tetramethyl-4-piperidyl)-amino]-1,3,5-triazin
21. 2-(3-Hydroxipropylamino)-4,6-bis-[N-2,2,6,6-tetramethyl-4-piperidyl)-butylamino]-1,3,5-triazin
22. 2-(3-Hydroxipropylamino)-4,6-bis-[N-2,2,6,6-tetramethyl-4-piperidyl)-3-methoxipropylamino]-1,3,5-triazin
23. 2-(6-Hydroxihexylamino)-4,6-bis-[N-(2,2,6,6-tetramethyl-4-piperidyl)-3-methoxipropylamino]-1,3,5-triazin
24. 2-(3-Hydroxipropylamino)-4-octadecylamino-6-[N-(2,2,6,6-tetramethyl-4-piperidyl)-3-methoxipropylamino]-1,3,5-triazin
25. 2-(2-Hydroxiethylamino)-4,6-bis-[N-(2,2,6,6-tetramethyl-4-piperidyl)-3-methoxipropylamino]-1,3,5-triazin
26. 2-(6-Hydroxihexylamino)-4-[N-(2,2,6,6-tetramethyl-4-piperidyl)-3-dimethylaminopropylamino]-6-[N-(2,2,6,6-tetramethyl-4-piperidyl)-3-methoxipropylamino]-1,3,5-triazin
27. 2-(3-Hydroxipropylamino)-4-butylamino-6-[N-(2,2,6,6-tetramethyl-4-piperidyl)-3-methoxipropylamino]-1,3,5-triazin
28. 2-(2-Hydroxiethylamino)-4-(3-octadecyloxipropylamino)-6-[N-(2,2,6,6-tetramethyl-4-piperidyl)-3-methoxipropylamino]-1,3,5-triazin
29. 2-(3-Hydroxipropylamino)-4-(diethylamino)-6-[N-(2,2,6,6-tetramethyl-4-piperidyl)-butylamino]-1,3,5-triazin
30. 2-(6-Hydroxiethylamino)-4-benzylamino-6-[N-(2,2,6,6-tetramethyl-4-piperidyl)-3-ethoxipropylamino]-1,3,5-triazin
31. 2-(3-Hydroxipropylamino-4,6-bis-[N-(2,2,6,6-tetramethyl-4-piperidyl)-octadecylamino]-1,3,5-triazin
32. 2-(3-Hydroxipropylamino)-4,6-bis-{1,9-bis[2-4-bis⟨N-(2,2,6,6-tetramethyl-4-piperidyl)-3-methoxipropylamino⟩-1,3,5-triazin-6-yl]-1,5-9-triazanonyl-5}-1,3,5-triazin

In der Literatur sind bereits zahlreiche Polyalkylpiperidinverbindungen, die die Estergruppeoder die Carbamoylgruppe enthalten, beschrieben. Genannt seien die DE-A-2 730 397 (Isocyanursäurederivate), die DE-C-1 929 928 (Polyalkylpiperidylester), die DE-A-2 719 133 und DE-A-2 623 422 (Polyalkylpiperidylester und -amide), die DE-A-2 640 409 (Polyalkylpiperidylurethane) und die DE-A-2 719 131 (Polyalkylpiperidylpolyester, -polyamide und -polyurethane). Den mittlerweile ausserordentlich hohen technischen Anforderungen, die an Lichtstabilisatoren für synthetische Polymere gestellt werden, genügen diese in ihrer Wirkung, Flüchtigkeit und Auswaschfestigkeit gegen Wasser unzureichenden Verbindungen nicht mehr.

In der neueren Zeit sind auch Triazinabkömmlinge beschrieben worden, die zwar die hydrolyseanfällige Ester- oder Urethanstruktur nicht besitzen (DE-A-2 636 144, DE-A-2 636 130) und somit strukturell an sich nicht mit den erfindungsgemässen Substanzen verglichen werden können, jedoch in ihrem anwendungstechnischen Gesamtbild auch noch nicht voll befriedigen.

Ester, die mit der wirksamen Piperidylaminostruktureinheit verknüpft sind, sind aus der EP-A-3542 bekannt. Hier ist primär der eigentliche Wirkungsträger blockiert, so dass die hochmolekulare Struktur im Stabilisierungsprozess erst wieder in Bruchstücke aufgelöst werden muss. Die so entstehenden niedermolekularen Anteile bedingen, dass auch diese Produkte die oben angeführten Nachteile der zu hohen Flüchtigkeit und Auswaschbarkeit besitzen.

Es war überraschend und nicht zu erwarten, dass die neuen Verbindungen trotz ihrer Esterstruktur denen des Standes der Technik überlegen sein würden, man musste vielmehr damit rechnen, dass bei ihrer Verwendung dieselben Probleme bezüglich der Flüchtigkeit, Auswaschbarkeit und unzureichenden Wirksamkeit auftreten würden, wie sie bei den oben zitierten Verbindungen des Standes der Technik beobachtet werden. Keineswegs vorhersehbar war schliesslich auch die Überlegenheit der neuen Ester im Hinblick auf die ebenfalls hochmolekularen Produkte der DE-A-2 719 131, denn beiden Substanzklassen liegen ähnliche chemische Grundstrukturen zugrunde. Nachdem die Verbindung gemäss Bsp. 1 der DE-A-2 719 131 als ein in der Praxis bereits verwendetes Spitzenprodukt bezeichnet werden kann, war nicht damit zu rechnen, dass es gelingen würde, Produkte in die Hand zu bekommen, die diesem Produkt deutlich überlegen sind und sich trotz der strukturellen Bedenken auch den vorstehend zitierten Triazinabkömmlingen mit freier Piperidin-NH-Gruppe als mindestens ebenbürtig erweisen.

Die neuen Triazinstabilisatoren lassen sich problemlos in die zu stabilisierenden Polymeren einarbeiten und sind bevorzugt zum Stabilisieren derselben gegen den lichtinduzierten oxidativen Abbau geeignet. Neben der ausgezeichneten Stabilisatorwirksamkeit zeichnet die neuen Stabilisatoren ihre Verträglichkeit mit den zu stabilisierenden Polymeren, ihre Migrationsfestigkeit gegen das Auswaschen mit wässrigen Medien, welche bei der Freibewitterung eine bedeutende Rolle spielt, ihre Thermostabilität auch bei hohen Verarbeitungstemperaturen und ihre geringe Flüchtigkeit, insbesondere im Vergleich zu Beispiel 6 der DE-A-2 636 144 aus.

Die neuen Verbindungen werden – wie bereits ausgeführt – als Stabilisatoren für Kunststoffe gegen deren Schädigung durch Einwirkung von Sauerstoff, Wärme und Licht verwendet. Beispiele für solche Kunststoffe sind im einzelnen:

Polymere, die sich von einfach oder doppelt ungesättigten Kohlenwasserstoffen ableiten, z.B. Polyolefine wie Polyethylen, das gegebenenfalls vernetzt sein kann, Polypropylen, Polybuten-1, Polyisobuten, Polymethylbuten-1, Polymethylpenten-1, Polyisopren, Polybutadien, Polystyrol, Copolymere der den genannten Homopolymeren zugrundeliegenden Monomeren, wie Ethylen-Propylen-Copolymere, Propylen-Buten-1-Copolymere, Propylen-Isobuten-Copolymere, Styrol-Butadien-Copolymere sowie Terpolymere von Ethylen und Propylen mit einem Dien, wie z.B. Hexadien, Dicyclopentadien oder Ethylidennorbornen, Mischungen der obengenannten Homopolymeren, wie beispielsweise Gemische von Polypropylen und Polyethylen, Polypropylen und Polybuten-1, Polypropylen und Polyisobutylen oder von Butadien-Acrylnitril-Copolymerisat mit einem Styrol-Butadien-Copolymerisat.

Halogenhaltige Vinylpolymere, wie Polyvinylchlorid, Polyvinylidenchlorid, Polyvinylfluorid, Polychloropren und Chlorkautschuke sowie Copolymere von Vinylchlorid und Vinylidenchlorid untereinander und mit anderen olefinisch ungesättigten Monomeren.

Polymere, die sich von α,β-ungesättigten Säuren und deren Derivaten ableiten, wie Polyacrylate und Polymethacrylate, Polyacrylamide und Polyacrylnitril sowie deren Copolymere untereinander und mit anderen Vinylverbindungen, wie Acrylnitril-Butadien-Styrol-, Acrylnitril-Styrol- und Acrylnitril-Styrol-Acrylester-Copolymerisate.

Polymere, die sich von ungesättigten Alkoholen und Aminen bzw. deren Acylderivaten oder Acetalen ableiten, wie Polyvinylalkohol, Polyvinalacetat, -stearat, -benzoat, -maleat, Polyvinylbutyral, Polyallylphthalat, Polyallylmelamin und deren Copolymere mit anderen Vinylverbindungen, wie Ethylen-Vinylacetat-Copolymere.

Homo- und Copolymere, die sich von Epoxiden ableiten, wie Polyethylenoxid oder die Polymerisate, die sich von Bisglycidylethern ableiten.

Polyacetale, wie Polyoxymethylen und Polyoxyethylen sowie solche Polyoxyethylene, die als Comonomeres Ethylenoxid enthalten.

Polyurethane und Polyharnstoffe.

Polycarbonat.

Polyamide und Copolyamide, die sich von Diaminen und Dicarbonsäuren und/oder von Aminocarbonsäuren oder den entsprechenden Lactamen ableiten, wie Polyamid 6, Polyamid 6/6, Polyamid 6/10, Polyamid 11, Polyamid 12.

Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylol-cyclohexanterephthalat.

Vernetzte Polymerisate, die sich von Aldehyden einerseits und Phenolen, Harnstoffen und Melaminen andererseits ableiten, wie Phenol-Formaldehyd-, Harnstoff-Formaldehyd- und Melamin-Formaldehydharze.

Die neuen Verbindungen lassen sich schliesslich auch als Stabilisatoren auf dem Harz- und Lacksektor einsetzen. Beispiele sind duroplastische und thermoplastische Acrylharze, welche für Autolackierungen verwendet werden (Encyclopedia of Polymer Science and Technology, Interscience Publishers, New York, Band 1 (1964), Seiten 273–276 und Band 13 (1970), Seiten 530–532, «Understanding Paint» von W.R. Fuller, in American Paint Journal Co., St. Louis, 1965, Seiten 124–135), Acrylharzlacke, das sind die üblichen Einbrennlacke (beschrieben z.B. in H. Kittel's «Lehrbuch der Lacke und Beschichtungen», Band 1, Teil 2, Seiten 735 und 742 (Berlin, 1972), und in H. Wagner, H.F. Sarx «Lackkunstharze», Seiten 229–235), sowie ganz besonders Mischungen auf der Basis von heiss-vernetzbarem Acrylharz und Styrol sowie Lacke und Beschichtungen auf der Basis von Acryl/Melaminharz und Alkyd/Acryl/Melaminharz. Derartige Lacke können als weitere Zusatzstoffe andere übliche Lichtschutzmittel, phenolische Antioxidantien, Pigmente, Farbstoffe, Metalldesaktivatoren, etc. enthalten.

Von besonderer Bedeutung ist die Stabilisierung von Polyolefinen, Styrolpolymerisaten, Polyamiden, Poly-(meth)acrylaten und von Polyurethanen, für die sich die Verbindungen bevorzugt eignen.

Beispiele hierfür sind Polyethylen hoher und niedriger Dichte, Polypropylen, Ethylen-Propylen-Copolymerisate, Polystyrol, Styrol-Butadien-Acrylnitril-Terpolymerisate, Mischungen von Polyolefinen oder von Styrolpolymerisaten sowie Polyurethane auf Polyether- oder Polyesterbasis.

Die neuen Stabilisatoren werden nach allgemein üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere direkt oder Einmischen in eine Lösung, Suspension oder Emulsion desselben, gegebenenfalls unter nachträglichem Verdunstenlassen des Lösungsmittels, erfolgen. Die Mengen liegen bei 0,01 bis 5, vorzugsweise bei 0,05 bis 2,5 und insbesondere bei 0,1 bis 1,0 Gew.-%, bezogen auf das zu stabilisierende Material. Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Kunststoffen zugesetzt werden.

Die durch den Zusatz der erfindungsgemässen Substanzen stabilisierten Kunststoffe können gegebenenfalls noch andere bekannte und übliche Zusätze, wie beispielsweise Antioxidantien auf Phenol- und Sulfidbasis, Metalldesaktivatoren und Lichtschutzmittel, Phosphitstabilisatoren, Metallverbindungen, Epoxystabilisatoren und mehrwertige Alkohole enthalten (s.a. DE-A-2 427 853, S. 18–24).

Beispiele für Antioxidantien sind sterisch gehinderte Phenole wie

2,6-Di-tert.-butyl-4-methylphenol,

4,4-Butyliden-bis-(2,6-di-tert.-butylphenol),

4,4′-Thio-bis-(2-tert.-butyl-5-methylphenol),

2,5-Di-tert.-butyl-4-hydroxianisol,

2,2-Bis-(3,5-di-tert.-butyl-2-hydroxibenzyl)-malonsäuredioctadecyl-ester,

1,3,5-Tris-(3,5-di-tert.-butyl-4-hydroxibenzyl)-2,4,6-tri-methyl-benzol,

2,4,6-Tri-(3,5-di-tert.-butyl-4-hydroxibenzyl)-phenol, phenolische Triazinverbindungen wie

1,3,5-Tris-(3,5-di-tert.-butyl-4-hydroxibenzyl)-isocyanurat, Ester der β-(3,5-Di-tert.-butyl-4-hydroxiphenyl)-propionsäure mit z.B. Octadecanol, Pentaerythrit und Tris-hydroxyethylisocyanurat,

Ester der 3,3-Bis-(3-tert.-butyl-4-hydroxiphenyl)-butansäure mit z.B. Ethylenglykol,

Thiodipropionsäureester mit Fettalkoholen, Ca- oder Ni-Salze des 3,5-Di-tert.-butyl-4-hydroxibenzylphosphorsäureethylesters, Dioctadecylsulfid und -disulfid.

Zu den UV-Absorbern und Lichtschutzmitteln gehören

2-(2′-Hydroxiphenyl)-benztriazole wie z.B. das 5-Chlor-3′,5′-di-tert.-butyl- und 5-Chlor-3′,5′-di-tert.-amyl-Derivat, 2-Hydroxibenzophenone wie z.B.

das 4-Heptoxi- oder 4-Octoxi-Derivat, Salizylate wie Octylphenylsalizylat, Nickelkomplexe wie z.B. die mit 2,2′-Thio-bis-[4-(1,1,3,3-tetramethylbutyl)-phenol] und Butylamin oder anderen Aminen, Oxalsäurediamide und sterisch gehinderte Amine.

Als Phosphite sind aliphatische, aromatische oder aliphatisch-aromatische wie z.B. Trisnonylphenylphosphit, Tris-(2,4-di-tert.-butylphenyl)-phosphit, Tris-(2-tert.-butylphenyl)-phosphit oder auch Ester des Pentaerythritphosphits zu nennen.

Unter als Stabilisatoren bekannten Metallverbindungen werden in diesem Zusammenhang verstanden: Calcium-, Barium-, Strontium-, Zink-, Cadmium-, Magnesium-, Aluminium-, und Bleiseifen aliphatischer Carbonsäuren oder Oxycarbonsäuren mit etwa 12 bis 32 C-Atomen, Salze der genannten Metalle mit aromatischen Carbonsäuren wie Benzoate oder Salizylate sowie (Alkyl)-Phenolate dieser Metalle, ferner Organozinnverbindungen wie z.B. Dialkylzinnthioglykolate und -carboxylate.

Bekannte Epoxystabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d.h. bevorzugt Alkohole mit 5 oder 6 C-Atomen und 2 bis 6 OH-Gruppen.

Eine wirksame Stabilisatorkombination für Poly-α-Olefine, wie z.B. Hoch-, Mittel- und Niederdruckpolymerisate von $C_2$- bis $C_4$-α-Olefinen, insbesondere Polyethylen und Polypropylen oder von Copolymerisaten derartiger α-Olefine besteht, bezogen auf 100 Gewichtsteile Polymer, beispielsweise aus 0,01 bis 5 Gewichtsteilen einer der erfindungsgemäss zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z. B. Calciumstearat oder Zinkstearat oder der entsprechenden Oxide sowie gegebenenfalls 0,01 bis 5 Gewichtsteilen eines bekannten UV-Stabilisators z.B., von Benzylidenmalonsäuremononitrilester, oder der sog. Quencher, wie z.B. Nickelchelate. Als sonstige übliche Zusätze sind z.B. Weichmacher, Gleitmittel, Emulgatoren, Füllstoffe wie z.B. Kreide, Talkum, Asbest, Pigmente, optische Aufheller, Flammschutzmittel und Antistatika anzusehen.

Die erfindungsgemäss stabilisierten Kunststoffe können in verschiedenster Form angewendet werden, z.B. als Folien, Fasern, Bändchen, Profile oder als Bindemittel für Lacke, Klebemittel oder Kitte.

Die folgenden Beispiele dienen der weiteren Erläuterung der Erfindung:

## Beispiele

In den folgenden Herstellungsbeispielen sind die eingesetzten Ausgangsstoffe durch Ziffern gekennzeichnet, welche sich auf die Numerierung der auf den Seiten 5 bis 6 aufgelisteten Substanzen beziehen.

### Beispiel 1

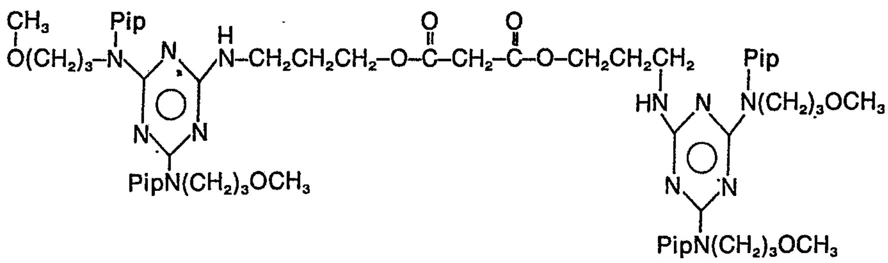

Pip= 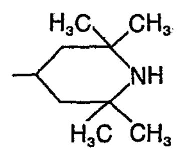

1,6 g (0,01 Mol) der Verbindung 1 werden mit 12,1 g (0,02 Mol) der Verbindung 22 in 100 ml Xylol unter wasserfreien Bedingungen und Zusatz von ca. 0,1 g $LiNH_2$ bei ca. 140 °C umgesetzt. In 3 Stunden wurden 0,9 g Ethanol abdestilliert. Anschliessend wurde heiss filtriert, das Lösungsmittel im Vakuum abdestilliert und der Rückstand i. Vak. getrocknet.

11,8 g eines gelblichen Harzes, Fp 83–88 °C der oben angegebenen Struktur.

### Beispiele 2 bis 15

Es wurde analog Beispiel 1 gearbeitet unter Einsatz anderer Edukte.

| Bsp. Nr. | Edukt 1 Verb. Nr. [g ≙ Mol] | Edukt 2 Verb. Nr. [g ≙ Mol] | Katalysator | Verfahrensprodukt Fp–°C |
|---|---|---|---|---|
| 2 | 5 [2,3 ≙ 0,01] | 25 [11,8 ≙ 0,02] | $LiNH_2$ | 75–84 |
| 3 | 3 [1,8 ≙ 0,01] | 24 [12,9 ≙ 0,02] | dto. | Wachs |
| 4 | 5 [2,3 ≙ 0,01] | 22 [12,1 ≙ 0,02] | dto. | 64 |
| 5 | 16 [3,9 ≙ 0,01] | 23 [18,2 ≙ 0,03] | dto. | 98–105 |
| 6 | dto. | 23 [19,4 ≙ 0,03] | dto. | 95 |
| 7 | dto. | 24 [19,4 ≙ 0,03] | dto. | Harz |
| 8 | 19 [5,7 ≙ 0,01] | 22 [18,2 ≙ 0,03] | dto. | 75–82 |
| 9 | 10 [3,2 ≙ 0,02] | 29 [17,0 ≙ 0,04] | $Ti[OiC_3H_7]_4$ | Harz |
| 10 | 18 [3,9 ≙ 0,01] | 22 [18,2 ≙ 0,03] | dto. | 96–104 |
| 11 | 17 [5,2 ≙ 0,015] | 27 [20,5 ≙ 0,045] | dto. | ca. 282 |
| 12 | 16 [3,9 ≙ 0,01] | 29 [13,1 ≙ 0,03] | $LiNH_2$ | ca. 70 |
| 13 | 9 [1,45 ≙ 0,01] | 22 [12,1 ≙ 0,02] | $Ti[OiC_3H_7]_4$ | 115–123 |
| 14 | 7 [1,9 ≙ 0,01] | 26 [13,2 ≙ 0,02] | dto. | Harz |
| 15 | 1 [1,6 ≙ 0,01] | 25 [11,8 ≙ 0,02] . | dto. | ca. 60 |

Beispiel 16

Dieses Beispiel zeigt die Flüchtigkeit der neuen Triazinstabilisatoren im Vergleich zu Produkten des nächsten Standes der Technik.

Die Flüchtigkeiten wurden in einer Apparatur zur thermogravimetrischen Analyse bestimmt. Gleiche Menge (500 mg) der erfindungsgemässen Verbindungen und der Vergleichssubstanzen wurden dazu in Stickstoffatmosphäre mit einer Aufheizgeschwindigkeit von 2 K/Min. bis auf 300 °C erhitzt und der Substanzverlust in mg/cm² Probenoberfläche gemessen. Die Ergebnisse zeigt nachstehende Tabelle:

| Stabilisator gemäss Bsp. | Gewichtsverlust in mg/cm² beim Erreichen von ... °C | | | |
|---|---|---|---|---|
| | 220 | 260 | 300 | 10 min bei 300 °C |
| 2 | 0,79 | 2,69 | 5,01 | 9,48 |
| 13 | 0,63 | 3,00 | 9,48 | 12,64 |
| Vergleich A | 0,95 | 2,37 | 17,38 | 90,74 |
| Vergleich B | 0,32 | 1,11 | 9,48 | 58,46 |
| Vergleich C | 0,42 | 3,48 | 10,59 | 17,38 |

Vergleich A Sebazinsäure-di-(2.2.6.6-tetramethyl-4-piperidyl)-ester
Vergleich B Verb. gemäss Bsp. 1 der DE-A-27 19 131
Vergleich C Verb. gemäss Bsp. 6 der DE-A-26 36 144

Beispiel 17

Dieses Beispiel soll die lichtstabilisierende Wirkung der neuen Verbindungen in einem Poly-α-Olefin aufzeigen.

100 Gewichtsteile Polypropylen mit dem Schmelzindex $i_5$ (230 °C) von ca. 6 g/10 min (bestimmt nach ASTM D 1238-62 T) und einer Dichte von 0,90 wurden mit

0,1 Gew.-T. Pentaerythrityl-tetrakis-3-(3,5-di-tert.-butyl-4-hydroxyphenyl)-propionat,
0,2 Gew.-T. Calciumstearat und
0,1 Gew.-T. des zu prüfenden erfindungsgemässen Stabilisators vermischt.

Um eine möglichst gleichmässige Verteilung auf dem Polymerkorn zu erreichen, wurden die Stabilisatoren in einem Lösemittel gelöst, und die Lösung wurde unter Rühren in das Polypropylenpulver eingetropft, wobei durch gleichzeitige Bestrahlung mit einer IR-Lampe der grösste Teil des Lösemittels wieder abdampfte. Nach ca. 20 min wurde das Calciumstearat hinzugegeben und noch weitere 10 min gemischt. Lösemittelreste wurden durch Trocknen bei 50 °C/120 min im Trokkenschrank entfernt. Das Polypropylen wurde auf einer Windsor-Spritzgussmaschine der Type SP 50 bei 240 °C zu 60 × 60 × 1 mm-Platten verspritzt. Aus diesen Platten wurden Prüfkörper nach DIN 53 455, Form 3, verkleinert im Massstab 1 : 3, ausgestanzt. Die als Vergleichsmuster benötigten Prüfkörper wurden analog, jedoch unter Fortlassen des zu testenden Stabilisators bzw. unter Zusatz der Vergleichsstabilisatoren, hergestellt.

Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsintensität wurde durch UV-Filter (Spezialfilterglas d = 1,7 mm) moduliert. Die Lichtbeständigkeit wurde nach DIN 53 387 (17 min Trockenperiode, 3 min beregnen, Schwarztafeltemperatur 45 °C, relative Luftfeuchtigkeit während der Trokkenperiode 70 bis 75%) geprüft. Gemessen wurde die Belichtungszeit in Stunden, und die Reissdehnung auf einer Zugprüfmaschine der Firma Instron bei einer Abzugsgeschwindigkeit von 5 cm/min ermittelt.

| Stabilisator nach Bsp. | Belichtungszeit in Stunden | ermittelte Reissdehnung in % vom Ausgangswert |
|---|---|---|
| 2 | 1400 | >50 |
| 13 | 1400 | >50 |
| Polypropylen | 260 | 1 |
| Vergleich D | 320 | 1 |
| Vergleich C | 1400 | 50 |
| Vergleich B | 600 | 1 |

Vergleich D ohne Stabilisator
Vergleich C und B: Definition der Vergleichsproben siehe Beispiel 16

Beispiel 18

In Polypropylen(®Hostalen PPU VP 1770 F der Hoechst AG) vom Schmelzindex MFI 190/5 = 1,9 g/10 min werden die unten angegebenen Rezepturbestandteile über einen Laborschnellmischer eingemischt. Die Mischung wird zu Granulat verarbeitet, welches man in einem Laborextruder unter den üblichen Verarbeitungsbedingungen aufschmilzt und über eine Spinnpumpe mit Achtfachspinnkopf zu Monofilamenten verspinnt, welche anschliessend im Verhältnis 1 : 3 nachverstreckt, zu Garn von 40dtex texturiert und zu Prüfgeweben verwebt werden.

100 Gew.-T. Polypropylen
0,2 Gew.-T. Calciumstearat
0,1 Gew.-T. 3,3-Bis-(3-tert.-butyl-4-hydroxiphenyl)-butansäureethylenglykolester
0,1 Gew.-T. Dioctadecyldisulfid
0,3 Gew.-T. des zu prüfenden Stabilisators.

Die Gewebeproben werden auf einen gelochten Karton so aufgespannt, dass eine freie Öffnung von ca. 15,5 mm Durchmesser bestehen bleibt. In dieser Form werden die Prüflinge im Xenotest X 1200 wie in dem vorhergehenden Beispiel beschrieben belichtet. In bestimmten Zeitabständen werden die Gewebe zentrisch mit einem Gewicht von 6 mm Durchmesser und einem Druck von 0,1 N/mm² belastet. Als Versagenstermin gilt das Durchbrechen des Gewichtes.

| Stabilisator nach Beispiel | Belichtungszeit in h |
|---|---|
| 2 | 3100 |
| 13 | 3200 |
| Polypropylen | < 280 |
| Vergleich D | 400 |
| Vergleich B | 1400 |
| Vergleich C | 3000 |

Vergleich D: ohne Stabilisator
Vergleich B und C: Definition der Vergleichsproben siehe Beispiel 16

Beispiel 19

Das wie im vorhergehenden Beispiel hergestellte stabilisierte Granulat wird auf einer Labor-Folienblasanlage (Schneckendurchmesser 25 mm, Länge 20 D), Temperaturprogramm 200, 240, 250, 255 °C) zu Blasfolien von ca. 70 µm Dichte verarbeitet. Diese Folien werden im Xenotest X 1200 wie im Beispiel 17 beschrieben künstlich bewittert. Als Schädigungsmerkmal wird die Carbonylzahl in Anlehnung an DIN 53 383, Teil 2 gemessen. (Diese wird für Polypropylen definiert als Verhältnis der Extinktionen bei 1715 $cm^{-1}$ und 1524 $cm^{-1}$.) Bei einer CO-Zahl > 2 beginnt der Zerfall der Prüfkörper zu Pulver.

| Stabilisator nach Beispiel | C=O-Zahl nach ... Std. | | | |
|---|---|---|---|---|
| | 500 | 1000 | 2000 | 2500 |
| 2 | <0,1 | <0,1 | 0,4 | 0,9 |
| 13 | <0,1 | <0,1 | 0,5 | 1,0 |
| Polypropylen | >2 | | | |
| Vergleich D | >2 | | | |
| Vergleich B | | >2 | | |
| Vergleich C | <0,1 | <0,1 | 0,4 | 0,9 |

Vergleich D: ohne Stabilisator
Vergleich B und C: Definition der Vergleichsproben siehe Beispiel 16

**Patentansprüche für die Vertragsstaaten BE, CH, DE, FR, GB, IT, LI, NL, SE**

1. Polyalkylpiperidinverbindungen der allgemeinen Formel (I)

$$R^1-O-\overset{\overset{O}{\|}}{C}-A-\overset{\overset{O}{\|}}{C}-O-R^2 \qquad I$$

in welcher -A-

a) für $C_1$–$C_{18}$-Alkylen oder $C_2$–$C_{18}$-Alkenylen steht, welches jeweils durch 1 oder 2 OH-Gruppen substituiert sein kann, oder

b) für Phenylen, Naphthylen oder einen $C_3$–$C_{12}$-cycloaliphatischen Rest steht, welche jeweils noch $C_1$–$C_4$-Alkylreste oder 1 bis 2 OH-Gruppen tragen können, oder

c) für ein $C_7$–$C_{14}$-Phenylalkylen stehen kann, wobei die vorstehenden Bedeutungen a) und b) jeweils noch durch 1 oder 2

$$-\overset{\overset{O}{\|}}{C}-O-R^3$$

-Reste substituiert sein können, oder

d) für den Rest

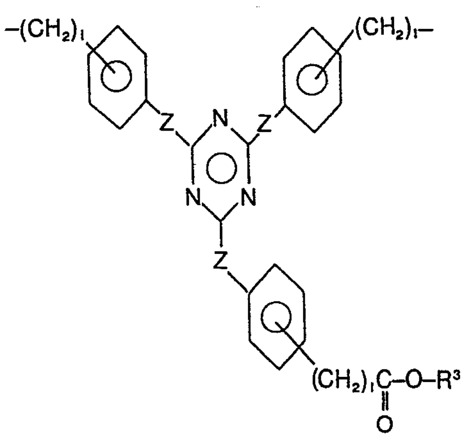

oder

e) für einen Rest

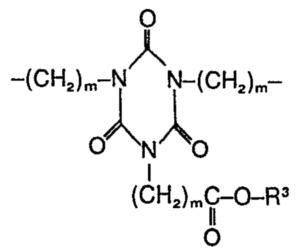

steht, wobei in diesen Resten

l eine ganze Zahl von 0 bis 2,

m eine ganze Zahl von 1 bis 5 und

Z –O– oder –NH– ist,

$R^1$, $R^2$ und $R^3$ für eine Gruppe der Formel (II) darstellen

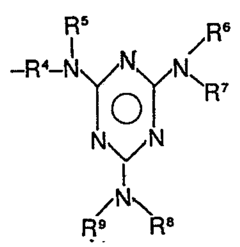 II

wobei in der Formel (II)

$R^4$ eine $C_2$- bis $C_6$-Alkylengruppe ist,

$R^5$ Wasserstoff, $C_1$- bis $C_{12}$-Alkyl, $C_5$- bis $C_{12}$-Cycloalkyl oder eine Gruppe der Formel (III)

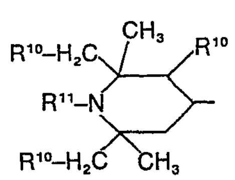 III

$R^{10}$ = Wasserstoff oder Methyl, und

$R^{11}$ = Wasserstoff oder $C_1$- bis $C_{12}$-Alkyl ist,

$R^6$, $R^7$, $R^8$, $R^9$ gleich oder verschieden sind und für Wasserstoff, für $C_1$- bis $C_{18}$-, für $C_5$- bis $C_{12}$-Cycloalkyl, für Allyl, für Phenyl, das durch 1 oder 2 $C_1$- bis $C_8$-Alkylgruppen und/oder durch OH substituiert sein kann, für $C_7$- bis $C_{14}$-Aralkyl, für eine Gruppe der Formel (III) oder für eine Gruppe der Formel (IV)

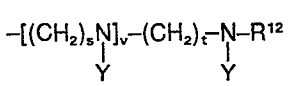 IV

stehen, mit

s und t = gleiche oder unterschiedliche Zahlen von 2 bis 6,

v = eine Zahl von 0 bis 3,

$R^{12}$ = Wasserstoff, $C_1$- bis $C_{18}$-Alkyl, $C_5$- bis $C_{12}$-Cycloalkyl, $C_7$- bis $C_{14}$-Aralkyl, oder eine Gruppe der Formel (III) sein kann, und

Y = einen Rest der Formel (V)

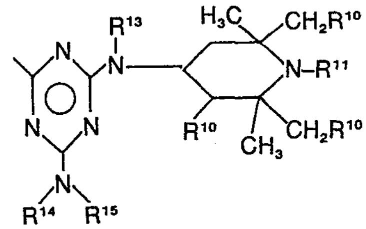 V

in der $R^{10}$ und $R^{11}$ die vorstehend angegebenen und $R^{13}$ und $R^{14}$ die für $R^6$, $R^7$, $R^8$ und $R^9$ genannten Bedeutungen, ausgenommen die der Formel (IV) haben, und

$R^{15}$ Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (III) ist,

wobei in der Formel (I) mindestens ein Rest für eine Gruppe der Formel (III) stehen oder diese enthalten muss.

2. Verfahren zur Herstellung der Polyalkylpiperidinverbindungen nach Anspruch 1, dadurch gekennzeichnet, dass man einen Ester der Formel (VI)

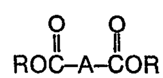 VI

worin A die in Anspruch 1 angegebene Bedeutung hat und R Methyl oder Ethyl ist, in einem inerten organischen Lösungsmittel bei einer Reaktionstemperatur von 70 bis 200 °C, gegebenenfalls unter Zusatz von Katalysatoren, mit einer Verbindung der allgemeinen Formel (VII),

$$H{-}O{-}R^2 \qquad \text{VII}$$

umsetzt, wobei in dieser Formel der Rest $R^2$ die Bedeutung einer Gruppe der Formel (II) gemäss Anspruch 1 besitzt und wobei die äquivalente Menge, bezogen auf funktionelle Gruppen in (VI), der Verbindung (VII) eingesetzt wird.

3. Verwendung der Verbindungen nach Anspruch 1 zum Stabilisieren von synthetischen Polymeren.

4. Verwendung nach Anspruch 3, dadurch gekennzeichnet, dass die Polymeren Polyolefine sind.

5. Verwendung nach Anspruch 3, dadurch gekennzeichnet, dass die Polymeren halogenhaltige Polymere, Polyacrylate oder Polymethacrylate oder Homo- oder Copolymere des Styrols sind.

6. Verfahren zum Stabilisieren von synthetischen Polymeren gegen den schädigenden Einfluss von Licht, dadurch gekennzeichnet, dass man den Polymeren, gegebenenfalls neben bekannten, stabilisierend wirkenden Stoffen, 0,01 bis

5 Gewichtsteile, bezogen auf Polymeres, einer Verbindung nach Anspruch 1 zusetzt.

7. Gegen UV-Zersetzung stabilisierte, synthetische Polymere, in denen als Stabilisator 0,01 bis 5 Gewichtsteile, bezogen auf Polymere, einer Verbindung nach Anspruch 1 enthalten sind.

**Patentansprüche für den Vertragsstaat AT**

1. Verfahren zur Herstellung von Polyalkylpiperidinverbindungen der allgemeinen Formel (I)

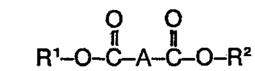
I

in welcher –A–

a) für $C_1$–$C_{18}$-Alkylen oder $C_2$–$C_{18}$-Alkenylen steht, welches jeweils durch 1 oder 2 OH-Gruppen substituiert sein kann, oder

b) für Phenylen, Naphthylen oder einen $C_3$–$C_{12}$-cycloaliphatischen Rest steht, welche jeweils noch $C_1$–$C_4$-Alkylreste oder 1 bis 2 OH-Gruppen tragen können, oder

c) für ein $C_7$–$C_{14}$-Phenylalkylen stehen kann, wobei die vorstehenden Bedeutungen a) und b) jeweils noch durch 1 oder 2

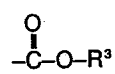

-Reste substituiert sein können, oder

d) für den Rest

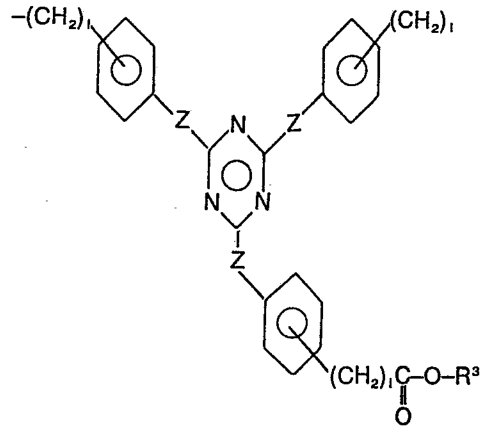

oder

e) für einen Rest

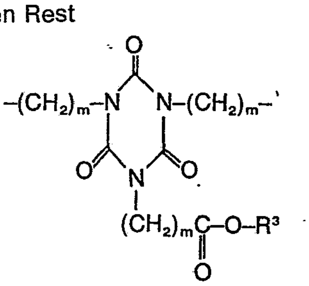

steht, wobei in diesen Resten

l eine ganze Zahl von 0 bis 2,

m eine ganze Zahl von 1 bis 5 und

Z –O– oder –NH– ist,

$R^1$, $R^2$ und $R^3$ eine Gruppe der Formel (II) darstellen

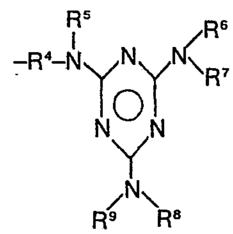
II

wobei in der Formel (II)

$R^4$ eine $C_2$- bis $C_6$-Alkylengruppe ist,

$R^5$ Wasserstoff, $C_1$- bis $C_{12}$-Alkyl, $C_5$- bis $C_{12}$-Cycloalkyl oder eine Gruppe der Formel (III),

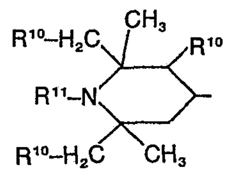
III

$R^{10}$ = Wasserstoff oder Methyl, und

$R^{11}$ = Wasserstoff oder $C_1$- bis $C_{12}$-Alkyl ist,

$R^6$, $R^7$, $R^8$ und $R^9$ gleich oder verschieden sind und für Wasserstoff, für $C_1$- bis $C_{18}$-Alkyl, für $C_5$- bis $C_{12}$-Cycloalkyl, für Allyl, für Phenyl, das durch 1 oder 2 $C_1$- bis $C_8$-Alkylgruppen und/oder durch OH substituiert sein kann, für $C_7$- bis $C_{14}$-Aralkyl, für eine Gruppe der Formel (III) oder für eine Gruppe der Formel (IV)

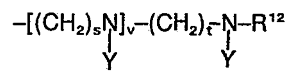
IV

stehen, mit

s und t = gleiche oder unterschiedliche Zahlen von 2 bis 6,

v = eine Zahl von 0 bis 3,

$R^{12}$ = Wasserstoff, für $C_1$- bis $C_{18}$-Alkyl, $C_5$- bis $C_{12}$-Cycloalkyl, $C_7$- bis $C_{14}$-Aralkyl, oder eine Gruppe der Formel (III) sein kann, und

Y = einen Rest der Formel (V)

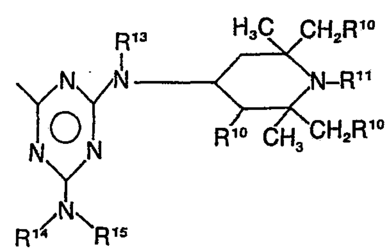
V

in der $R^{10}$ und $R^{11}$ die vorstehend angegebenen und $R^{13}$ und $R^{14}$ die für $R^6$, $R^7$, $R^8$ und $R^9$ genannten Bedeutungen, ausgenommen die der Formel (IV) haben, und

$R^{15}$ Wasserstoff, $C_1$- bis $C_{18}$-Alkyl, $C_5$- bis $C_{12}$-Cycloalkyl, $C_7$- bis $C_{14}$-Aralkyl oder eine Gruppe der Formel (III) ist,

wobei in der Formel (I) mindestens ein Rest für eine Gruppe der Formel (III) stehen oder diese enthalten muss, dadurch gekennzeichnet, dass man einen Ester der Formel (VI)

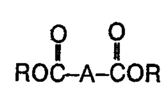
VI

worin A die in Anspruch 1 angegebene Bedeutung hat und R Methyl oder Ethyl ist, in einem inerten organischen Lösungsmittel bei einer Reaktionstemperatur von 70 bis 200 °C, falls erforderlich unter Zusatz von Katalysatoren, mit einer Verbindung der allgemeinen Formel (VII),

$$H-O-R^2 \qquad (VII)$$

umsetzt, wobei in dieser Formel der Rest $R^2$ die Bedeutung einer Gruppe der obigen Formel (II) hat und wobei die äquivalente Menge, bezogen auf funktionelle Gruppen in (VI), der Verbindung (VII) eingesetzt wird.

2. Verwendung der nach Anspruch 1 hergestellten Verbindungen zum Stabilisieren von synthetischen Polymeren.

3. Verwendung nach Anspruch 2, dadurch gekennzeichnet, dass die Polymeren Polyolefine sind.

4. Verwendung nach Anspruch 2, dadurch gekennzeichnet, dass die Polymeren halogenhaltige Polymere, Polyacrylate oder Polymethacrylate oder Homo- oder Copolymere des Styrols sind.

5. Verfahren zum Stabilisieren von synthetischen Polymeren gegen den schädigenden Einfluss von Licht, dadurch gekennzeichnet, dass man den Polymeren, gegebenenfalls neben bekannten, stabilisierend wirkenden Stoffen, 0,01 bis 5 Gewichtsteile, bezogen auf Polymeres, einer nach Anspruch 1 hergestellten Verbindung zusetzt.

6. Gegen UV-Zersetzung stabilisierte, synthetische Polymere, in denen als Stabilisator 0,01 bis 5 Gewichtsteile, bezogen auf Polymere, einer nach Anspruch 1 hergestellten Verbindung enthalten sind.

**Claims for the contracting States: BE, CH, DE, FR, GB, IT, LI, NL, SE**

1. A polyalkylpiperidine compound of the general formula (I)

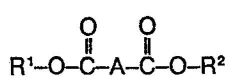
I

in which A represents

a) $C_1$- to $C_{18}$-alkylene or $C_2$- to $C_{18}$-alkenylene each of which can be substituted by one or two OH-groups,

b) phenylene, naphthylene or a $C_3$- to $C_{12}$-cycloaliphatic radical each of which can be substituted by $C_1$- to $C_4$-alkyl groups or one or two OH-groups, or

c) a $C_7$- to $C_{14}$-phenylalkylene groups, each of the meanings mentioned under a) and b) can be substituted by one or two

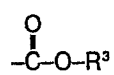

groups, or A represents

d a radical

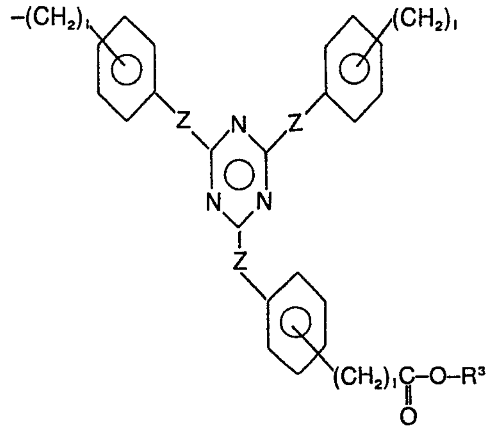

or a radical

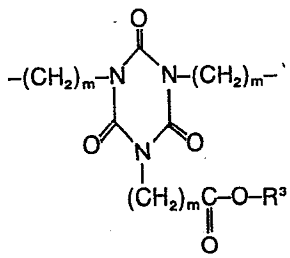

in which radicals l is an integer from 0 to 2, m is an integer from 1 to 5 and Z is –O– or –NH–, $R^1$, $R^2$ and $R^3$ represent a group of the formula (II)

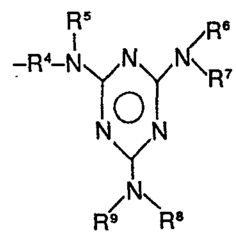
II

and, in formula (II) $R^4$ is a $C_2$- to $C_6$-alkylene group, $R^5$ represents hydrogen, $C_1$- to $C_{12}$-alkyl, $C_5$- to $C_{12}$-cycloalkyl or a group of the formula (III)

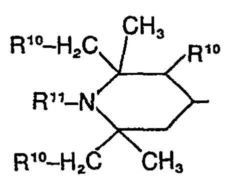
III

in which $R^{10}$ is hydrogen or methyl and $R^{11}$ is hydrogen, $C_1$- to $C_{12}$-alkyl, $R^6$, $R^7$, $R^8$ and $R^9$ are identical or different and represent hydrogen, $C_1$- to $C_{18}$-alkyl, $C_5$- to $C_{12}$-cycloalkyl, allyl, phenyl which can be substituted by 1 or 2 $C_1$- to $C_8$-alkyl groups and/or by OH, $C_7$- to $C_{14}$-aralkyl, a group of the formula (III) or a group of the formula (IV)

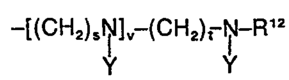
IV

in which s and t are identical or different numbers from 2 to 6, v is an integer from 0 to 3, $R^{12}$ is hydrogen, $C_1$- to $C_{18}$-alkyl, $C_5$- to $C_{12}$-cycloalkyl, $C_7$- to $C_{14}$-aralkyl or a group of the formula (III), and Y is a radical of the formula (V)

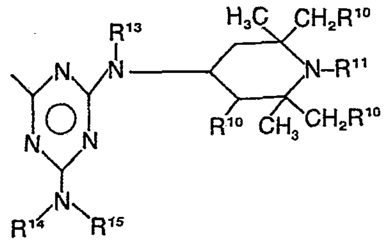

V

in which $R^{10}$ and $R^{11}$ have the meanings indicated above and $R^{13}$ and $R^{14}$ have the meanings given for $R^6$, $R^7$, $R^8$ and $R^9$, excepting those of the formula (IV) and $R^{15}$ is hydrogen, $C_1$- to $C_{18}$-alkyl, $C_5$- to $C_{12}$-cycloalkyl, $C_7$- to $C_{14}$-aralkyl or a group of the formula (III), and in formula (I) at least one radical represents a group of the formula (III) or contains this group.

2. A process for the preparation of the polyalkylpiperidine compounds as claimed in claim 1, which comprises reacting an ester of the formula (VI)

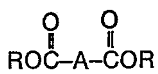

VI

in which A has the meanings indicated in claim 1 and R is methyl or ethyl, in an inert organic solvent at a reaction temperature of 70 to 200 °C, if necessary with the addition of catalysts, with a compound of the general formula (VII)

$$H-O-R^2 \qquad VII$$

in this formula radical $R^2$ denotes a group of the formula (II) according to claim 1, an equimolar to equivalent quantity of the compound (VII), relative to functional groups in (VI) is employed.

3. Use of the compounds as claimed in claim 1 for stabilizing synthetic polymers.

4. Use as claimed in claim 3, wherein the polymers are polyolefins.

5. Use as claimed in claim 3, wherein the polymers are halogen-containing polymers, polyacrylates or polymethacrylates or homopolymers or copolymers of styrene.

6. A process for stabilizing synthetic polymers against the harmful effects of light, wherein 0.01 to 5 parts by weight, relative to the polymer, of a compound as claimed in claim 1 are added to the polymers, if appropriate in addition to known substances having a stabilizing action.

7. Synthetic polymers which have been stabilized against decomposition by UV and in which 0.01 to 5 parts by weight, relative to polymer, of a compound as claimed in claim 1 are present as the stabilizer.

**Claims for the contracting State: AT**

1. A process for the preparation of polyalkylpiperidine compounds of the general formula (I)

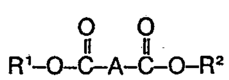

I

in which A represents

a) $C_1$- to $C_{18}$-alkylene or $C_2$- to $C_{18}$-alkenylene each of which can be substituted by one or two OH-groups,

b) phenylene, naphthylene or a $C_3$- to $C_{12}$-cycloaliphatic radical each of which can be substituted by $C_1$- to $C_4$-alkyl groups or one or two OH-groups, or

c) a $C_7$- to $C_{14}$-phenylalkylene group, each of the meanings mentioned under a) and b) can be substituted by one or two

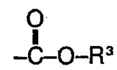

groups, or A represents

d) a radical

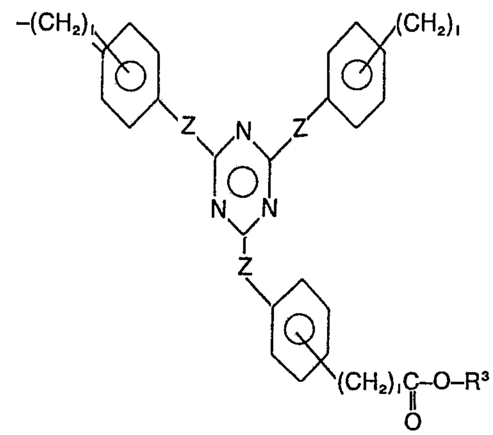

or a radical

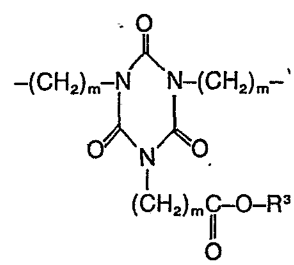

in which radicals l is an integer from 0 to 2, m is an integer from 1 to 5 and Z is –O– or –NH–, $R^1$, $R^2$ and $R^3$ represent a group of the formula (II)

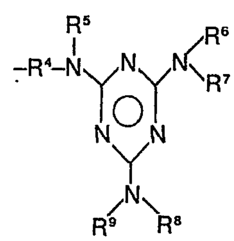

II

and, in formula (II) $R^4$ is a $C_2$- to $C_6$-alkylene group, $R^5$ represents hydrogen, $C_1$- to $C_{12}$-alkyl, $C_5$- to $C_{12}$-cycloalkyl or a group of the formula (III)

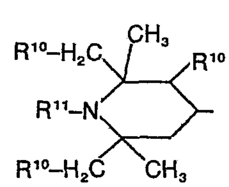

III

in which $R^{10}$ is hydrogen or methyl and $R^{11}$ is hydrogen, $C_1$- to $C_{12}$-alkyl, $R^6$, $R^7$, $R^8$ and $R^9$ are identical or different and represent hydrogen, $C_1$- to $C_{18}$-alkyl, $C_5$- to $C_{12}$-cycloalkyl, allyl, phenyl which can be substituted by 1 or 2 $C_1$- to $C_8$-alkyl groups and/or by OH, $C_7$- to $C_{14}$-aralkyl, a group of the formula (III) or a group of the formula (IV)

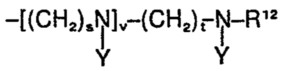 IV

in which s and t are identical or different numbers from 2 to 6, v is an integer from 0 to 3, $R^{12}$ is hydrogen, $C_1$- to $C_{18}$-alkyl, $C_5$- to $C_{12}$-cycloalkyl, $C_7$- to $C_{14}$-aralkyl or a group of the formula (III), and Y is a radical of the formula (V)

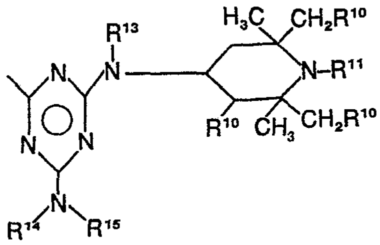 V

in which $R^{10}$ and $R^{11}$ have the meanings indicated above and $R^{13}$ and $R^{14}$ have the meanings given for $R^6$, $R^7$, $R^8$ and $R^9$, excepting those of the formula (IV) and $R^{15}$ is hydrogen, $C_1$- to $C_{18}$-alkyl, $C_5$- to $C_{12}$-cycloalkyl, $C_7$- to $C_{14}$-aralkyl or a group of the formula (III), and in formula (I) at least one radical represents a group of the formula (III) or contains this group, which comprises reacting an ester of the formula (VI)

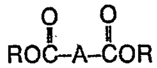 VI

in which A has the meanings indicated above and R is methyl or ethyl, in an inert organic solvent at a reaction temperature of 70 to 200 °C, if necessary with the addition of catalysts, with a compound of the general formula (VII)

$$H\text{-}O\text{-}R^2 \qquad VII$$

in this formula radical $R^2$ denotes a group of the formula (II), an equimolar to equivalent quantity of the compound (VII), relative to functional groups in (VI) is employed.

2. Use of the compounds as claimed in claim 1 for stabilizing synthetic polymers.

3. Use as claimed in claim 2, wherein the polymers are polyolefins.

4. Use as claimed in claim 3, wherein the polymers are halogen-containing polymers, polyacrylates or polymethacrylates or homopolymers or copolymers of styrene.

5. A process for stabilizing synthetic polymers against the harmful effects of light, wherein 0.01 to 5 parts by weight, relative to the polymer, of a compound as claimed in claim 1 are added to the polymers, if appropriate in addition to known substances having a stabilizing action.

6. Synthetic polymers which have been stabilized against decomposition by UV and in which 0.01 to 5 parts by weight, relative to polymer, of a compound as claimed in claim 1 are present as the stabilizer.

**Revendications pour les Etats contractants: BE, CH, DE, FR, GB, IT, LI, NL, SE**

1. Composés polyalkyl-pipéridiniques répondant à la formule I:

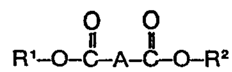 I

dans laquelle –A– représente:

a) un alkylène en $C_1$–$C_{18}$ ou un alcénylène en $C_2$–$C_{18}$, chacun d'eux pouvant porter un ou deux radicaux -OH, ou

b) un phénylène, un naphtylène ou un radical cycloaliphatique en $C_3$–$C_{12}$, chacun d'eux pouvant en outre porter des radicaux alkyles en $C_1$–$C_4$ ou 1 ou 2 radicaux -OH, ou

c) un phénylalkylène en $C_7$–$C_{14}$, chacun des radicaux mentionnés pour –A– sous a) et b) pouvant en outre porter 1 ou 2 radicaux

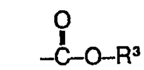

ou

d) un radical de formule:

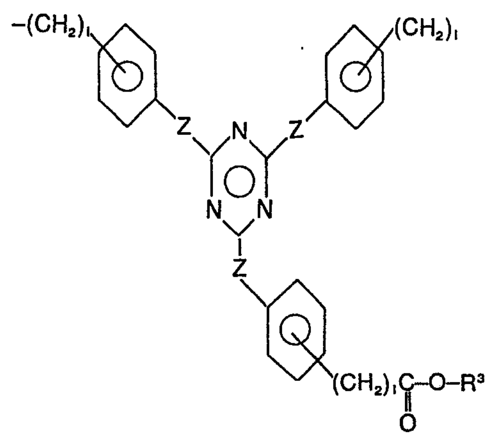

ou

e) un radical de formule:

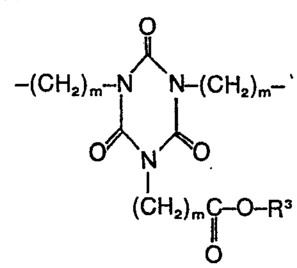

formules dans lesquelles:

l représente un nombre entier de 0 à 2,

m représente un nombre entier de 1 à 5,

Z représente –O– ou –NH–,

$R^1$, $R^2$ et $R^3$ représentent chacun un radical répondant à la formule II:

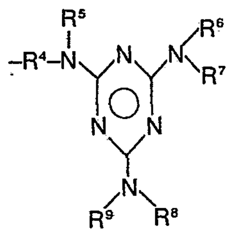

II

dans laquelle:

$R^4$ représente un radical alkylène en $C_2$–$C_6$,

$R^5$ représente l'hydrogène, un alkyle en $C_1$–$C_{12}$, un cycloalkyle en $C_5$–$C_{12}$ ou un radical de formule III:

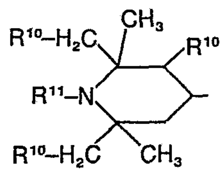

III

dans laquelle:

$R^{10}$ représente l'hydrogène ou un méthyle et

$R^{11}$ représente l'hydrogène ou un alkyle en $C_1$–$C_{12}$,

$R^6$, $R^7$, $R^8$ et $R^9$ représentent chacun, indépendamment les uns des autres, l'hydrogène, un alkyle en $C_1$–$C_{18}$, un cycloalkyle en $C_5$–$C_{12}$, un allyle, un phényle éventuellement porteur d'un ou de deux radicaux alkyles en $C_1$–$C_8$ et/ou d'un radical –OH, un aralkyle en $C_7$–$C_{14}$, un radical de formule III ou un radical répondant à la formule IV:

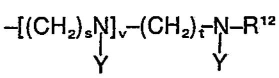

IV

dans laquelle:

s et t représentent chacun, indépendamment l'un de l'autre, un nombre de 2 à 6,

v représente un nombre de 0 à 3,

$R^{12}$ représente l'hydrogène, un alkyle en $C_1$–$C_{18}$, un cycloalkyle en $C_5$–$C_{12}$, un aralkyle en $C_7$–$C_{14}$ ou un radical de formule III, et

Y représente un radical répondant à la formule V:

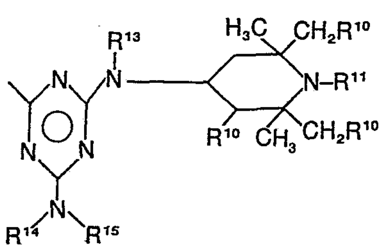

V

dans laquelle:

$R^{10}$ et $R^{11}$ ont les significations précédemment données,

$R^{13}$ et $R^{14}$ ont les significations qui ont été données plus haut pour $R^6$, $R^7$, $R^8$ et $R^9$ à l'exception des radicaux de formule IV, et

$R^{15}$ représente l'hydrogène, un alkyle en $C_1$–$C_{18}$, un cycloalkyle en $C_5$–$C_{12}$, un aralkyle en $C_7$–$C_{14}$ ou un radical de formule III,

la formule I devant contenir au moins un radical de formule III.

2. Procédé de préparation des composés polyalkyl-pipéridiniques selon la revendication 1, procédé caractérisé en ce qu'on fait réagir un ester répondant à la formule VI:

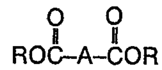

VI

dans laquelle A a la signification donnée à la revendication 1 et R représente un radical méthyle ou éthyle, dans un solvant organique inerte, à une température réactionnelle de 70 à 200 °C, éventuellement en présence de catalyseurs, avec un composé répondant à la formule générale VII:

$$H–O–R^2 \qquad (VII)$$

dans laquelle $R^2$ représente un radical de formule II selon la revendication 1, le composé (VII) étant mis en jeu en la quantité équivalente par rapport aux radicaux fonctionnels contenus dans (VI).

3. Application des composés selon la revendication 1 pour la stabilisation de polymères synthétiques.

4. Application selon la revendication 3 caractérisée en ce que les polymères sont des polyoléfines.

5. Application selon la revendication 3 caractérisée en ce que les polymères sont des polymères halogénés, des polyacrylates, des polyméthacrylates, ou des homopolymères ou copolymères du styrène.

6. Procédé pour stabiliser des polymères synthétiques contre les effets destructeurs de la lumière, procédé caractérisé en ce qu'on ajoute aux polymères, éventuellement en plus de substances connues à action stabilisante, de 0,01 à 5% en poids, par rapport au polymère, d'un composé selon la revendication 1.

7. Polymères synthétiques stabilisés contre la décomposition par les rayons ultra-violets, polymères qui contiennent, comme stabilisant, de 0,01 à 5% en poids, par rapport au polymère, d'un composé selon la revendication 1.

**Revendications pour l'Etat contractant: AT**

1. Procédé de préparation de composés polyalkyl-pipéridyliques répondant à la formule générale I:

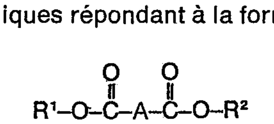

I

dans laquelle –A– représente:

a) un alkylène en $C_1$–$C_{18}$ ou un alcénylène en $C_2$–$C_{18}$, chacun d'eux pouvant porter un ou deux radicaux –OH, ou

b) un phénylène, un naphtylène ou un radical cycloaliphatique en $C_3$–$C_{12}$, chacun d'eux pouvant en outre porter des radicaux alkyles en $C_1$–$C_4$ ou 1 ou 2 radicaux –OH, ou

c) un phénylalkylène en $C_7$–$C_{14}$, chacun des radicaux mentionnés pour –A– sous a) et b) pouvant en outre porter 1 ou 2 radicaux

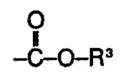

ou

d) un radical de formule:

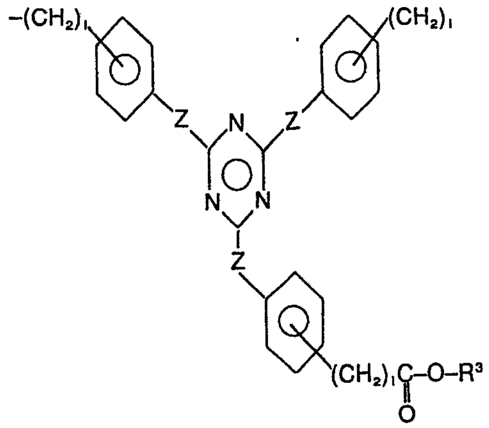

ou

e) un radical de formule:

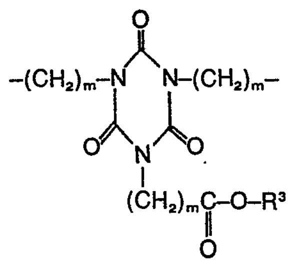

formules dans lesquelles:

l représente un nombre entier de 0 à 2,

m représente un nombre entier de 1 à 5,

Z représente –O– ou –NH–,

$R^1$, $R^2$ et $R^3$ représentent chacun un radical répondant à la formule II:

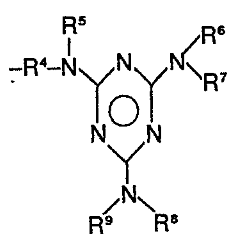

II

dans laquelle:

$R^4$ représente un radical alkylène en $C_2$–$C_6$,

$R^5$ représente l'hydrogène, un alkyle en $C_1$–$C_{12}$, un cycloalkyle en $C_5$–$C_{12}$ ou un radical de formule III:

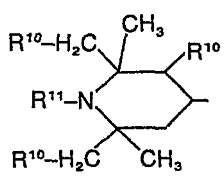

III

dans laquelle:

$R^{10}$ représente l'hydrogène ou un méthyle et

$R^{11}$ représente l'hydrogène ou un alkyle en $C_1$–$C_{12}$,

$R^6$, $R^7$, $R^8$ et $R^9$ représentent chacun, indépendamment les uns des autres, l'hydrogène, un alkyle en $C_1$–$C_{18}$, un cycloalkyle en $C_5$–$C_{12}$, un allyle, un phényle éventuellement porteur d'un ou de deux radicaux alkyles en $C_1$–$C_8$ et/ou d'un radical –OH, un aralkyle en $C_7$–$C_{14}$, un radical de formule III ou un radical répondant à la formule IV:

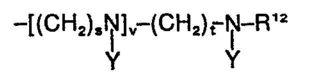

IV

dans laquelle:

s et t représentent chacun, indépendamment l'un de l'autre, un nombre de 2 à 6,

v représente un nombre de 0 à 3,

$R^{12}$ représente l'hydrogène, un alkyle en $C_1$–$C_{18}$, un cycloalkyle en $C_5$–$C_{12}$, un aralkyle en $C_7$–$C_{14}$ ou un radical de formule III, et

Y représente un radical répondant à la formule V:

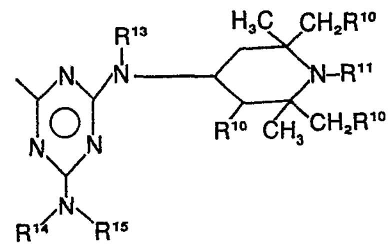

V

dans laquelle:

$R^{10}$ et $R^{11}$ ont les significations précédemment données,

$R^{13}$ et $R^{14}$ ont les significations qui ont été données plus haut pour $R^6$, $R^7$, $R^8$ et $R^9$ à l'exception des radicaux de formule IV, et

$R^{15}$ représente l'hydrogène, un alkyle en $C_1$–$C_{18}$, un cycloalkyle en $C_5$–$C_{12}$, un aralkyle en $C_7$–$C_{14}$ ou un radical de formule III,

la formule I devant contenir au moins un radical de formule III, procédé caractérisé en ce qu'on fait réagir un ester répondant à la formule VI:

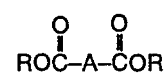

VI

dans laquelle A a la signification indiquée ci-dessus et R représente un radical méthyle ou éthyle, dans un solvant organique inerte, à une température réactionnelle comprise entre 70 et 200 °C, au besoin en présence de catalyseurs, avec un composé répondant à la formule générale VII:

$$H\text{–}O\text{–}R^2 \qquad (VII)$$

dans laquelle $R^2$ représente un radical répondant à la formule II représentée et définie ci-dessus, en utilisant une quantité du composé (VII) égale à la quantité équivalente par rapport aux radicaux fonctionnels contenus dans (VI).

2. Application des composés préparés selon la revendication 1 pour la stabilisation de polymères synthétiques.

3. Application selon la revendication 2 caractérisée en ce que les polymères sont des polyoléfines.

4. Application selon la revendication 2 caractérisée en ce que les polymères sont des polymères

halogénés, des polyacrylates, des polyméthacrylates ou des homopolymères ou copolymères du styrène.

5. Procédé pour stabiliser des polymères synthétiques contre les effets destructeurs de la lumière, procédé caractérisé en ce qu'on ajoute aux polymères, éventuellement en plus de substances à action stabilisante connues, de 0,01 à 5% en poids, par rapport au polymère, d'un composé qui a été préparé selon la revendication 1.

6. Polymères synthétiques stabilisés contre la décomposition par des rayons ultra-violets, polymères qui contiennent, comme stabilisant, de 0,01 à 5% en poids, par rapport au polymère, d'un composé qui a été préparé selon la revendication 1.